# EUROPEAN PATENT APPLICATION

(11) **EP 2 865 566 A2**
(43) Date of publication of application: **29.04.2015**
(21) Application number: 14190368.2
(22) Date of filing: 24.10.2014
(51) Int. Cl.: B60P 3/10

(54) **Boat trailer**

(30) Priority: 25.10.2013 NL 1040470
(71) Applicant: Dekker, Nicolaas Jan, 1771 SL Wieringerwerf (NL)
(72) Inventor: Dekker, Nicolaas Jan, 1771 SL Wieringerwerf (NL)
(74) Representative: Ellens, Andries

(57) **Abstract**

The invention relates to a device for supporting a boat, especially a boat trailer, having improved support means for uniform support of a boat when the boat is winched onto a trailer. The device according to the invention is among other things characterized by support wheels for the boat which are provided on rotatable axles connected to hinged beams.

The invention further relates to a trailer for a curved body.

## Description

### BACKGROUND OF THE INVENTION

Most common boat trailers for larger boats typically have keel support rollers and bilge support rollers to support and guide the boat during loading the boat on a trailer, for instance by means of a winch attached to the trailer. Subsequently, the boat rollers function as means to support the boat (during transport). Keel and bilge support rollers mostly comprise rollers having a substantially cylindrical surface. In known state of the art embodiments, boot trailers are provided with a number of fixed keel support rollers located in the middle of the boot trailer and a number of bilge support rollers located near or at the side of the trailer which have to be adjusted in height manually. As a result, this actually can never be performed adequately before the boat is loaded onto the trailer. Consequently, the bilge support rollers generally can not contribute to a correct support of the boat when winching the boat on the trailer.

### SUMMARY OF THE INVENTION

State of art trailers are often provided with bilge support rollers, having either a wide straight surface or comprising two separate rollers connected either to one single axle or to two shorter axles positioned in-line with each other, therewith largely disabling the bilge support rollers to trace every contour of the boat. As a result, the boat may be too heavily stressed in the middle, at the keel, or at the sides (bilge) when the boat is winched onto the trailer. Consequently, this may lead to weak spots in the hull and/or the hull may be damaged.

It is and aspect of the invention to provide a solution to the above mentioned issue, wherein a boat trailer comprises a support assembly (herein also indicated as "assembly") for a vessel (such as a boat), wherein the support assembly comprises a first stand, two beams, a first axle comprising a first support wheel, especially a keel support wheel (herein also indicated as "keel wheel"), and a second axle comprising a second support wheel, especially a bilge support wheel (herein also indicated as "bilge wheel"), wherein the beams are jointly parallel and hingedly coupled in between their far ends to the first stand, and wherein the two beams jointly support the first axle at their first far end and jointly support the second axle at their second far end.

The terms "support wheel", "bilge support wheel", and "keel wheel" are intentionally used since the support rollers of embodiments of the boat trailer of the invention are preferably shaped like wheels having a curved cross-section (or curved surface), in contrast to the straight rollers (herein also indicates as cylindrical rollers) which are provided at common boat trailers having a straight surface. Nevertheless, in other embodiments these terms may also refer to wheels having a cylindrical surface.

The "far end" of the beam dos not *per se* refer to the "tip" (or "short side") of the beam. A far end or an "end" of a beam is especially located between the middle of a beam and the tip (or short side) of a beam, wherein the far end also includes the tip (or short side). For instance, the "far end" is located between the tip of the beam and the final 30% of the length of the beam, such as located in the final 20% of the length of the beam. A person skilled in the art will understand that the far end also comprises any optional provision or optional provisions provided to the short side(s) of the beam(s) for supporting an axle. Consequently, an axle bar (see below) may also be arranged at a short side of a beam and respective axle bars may comprise axles respectively.

A parallel-guiding system is created by providing the two beams (herein also indicated as "mean beams") parallel to each other and one above the other, coupling these beams at their far end to the two axles and coupling this as a whole rotatable to the first stand. The two axles can not move freely relative to each other. They are only movable parallel to themselves by rotational movement of the two beams. Hence, the (main) beams of the support assembly are especially capable of rotation in a (vertical) plane substantially perpendicular to a longitudinal axis of the boat trailer.

In a specific embodiment of the invention, the boat trailer comprises a support assembly for a vessel, wherein the support assembly comprises a first stand, two beams, a first axle comprising a keel wheel and a second axle comprising a bilge wheel, wherein the beams are parallel to each other hingedly coupled in between their far ends to the first stand, and wherein the two beams jointly support the first axle at their first far end and jointly support the second axle at their second far end, wherein the first axle and the second axle are moveable parallel tot hem selves by parallel-guiding.

In an embodiment, the support assembly further comprises axle bars, especially a first axle bar and a second axle bar, wherein the beams jointly at their first far end support the first axle bar coupled to the first axle and jointly at their second far end support the second axle bar coupled to the second axle, wherein the first axle bar and the second axle bar not necessarily have to be configured identical. The orientation of the axle(s) (bars) can be controlled by moving the beams.

The beams may be coupled to the first stand by making use of an opening provided in the stand and an opening in the beams configured between the two far ends of the beams. The main beams can be coupled rotatably to the first stand by means of a fastener, such as a (wooden) pin or a bolt. Providing multiple openings in line between the far ends of the main beams, especially having one of the openings provided in the center (between the far ends) of the beams, enables coupling of the beams symmetrically (using the opening(s) in the center of the beam(s)) or asymmetrically to the first stand and consequently (enables control over) the location of a support wheel.

Further, the beams may be provided with openings at or near their first far end and their second far end configured to rotatably couple respectively the first axle bar and the second axle bar to the main beams. The axle bars, especially are provided with openings configured for coupling the axle bars to the main beams. Moreover, it e.g. is also possible to provide an axle provision at the short side of the beams. In a specific embodiment, the (main) beams of the support assembly comprise at least three openings each. Hence, in an embodiment, these (at least 3) openings can be used to couple the beams to the stand and/or to couple the beams to an axle bar.

In a further embodiment, the boat trailer comprises support means for the keel and bilge of a boat, wherein the support means are spontaneously adjustable (within a wide range) to the shape and the form (contours) and the size of a boat, and therewith provide optimal support during and after winching the boat onto the trailer.

To provide a desired support of the keel and the bilge of a boat during loading the boat onto the trailer especially by means of a winch attached to the trailer, as well as during transit of the boat-trailer combination, it may be beneficial if the keel wheel and the bilge wheel are of different sizes. It may be desirable if the width of the surface of the bilge wheel differs from the width of the surface of the keel wheel. It especially may be beneficial if the external diameter of the bilge wheel and the external diameter of the keel wheel are not the same. For this, the invention provides the use of exchangeable keel wheels and/or exchangeable bilge wheels. Additionally or alternatively, a keel wheel having an external diameter different from a standardized bilge wheel may be provided by default. Moreover, the method used to realize a difference in external diameter of the support wheels does not affect the desired result.

In a further embodiment, the boat trailer comprises a keel wheel and a bilge wheel, wherein the external diameter of the keel wheel differs from the external diameter of the bilge wheel. Due to the form and shape of the keel and the bilge, it may especially be beneficial selecting the external diameter of the keel wheel to be larger than the external diameter of the bilge wheel in order to support the keel as well as the bilge properly. However, depending on the form and the shape of the keel and the bilge it also might be especially beneficial if the external diameter of the bilge wheel is selected to be larger than the external diameter of the keel wheel, in order to support the keel as well as the bilge properly.

In a specific embodiment, the boat trailer comprises a support assembly, wherein the keel wheel and the bilge wheel are both exchangeable and wherein the ratio of the external diameter of the keel wheel to the external diameter of the bilge wheel may be selected. In addition to the parallel translation, already resulting in a significant operational freedom, this option further increased the freedom to operate enabling a correct support of virtually all vessels by the support assembly.

The interaction between the keel of the boat and the bilge of the boat with respectively the keel wheel and the bilge wheel may, depending on (the shape and from of) the hull of the boat, further be improved, especially enlarged, by selecting the (vertical) position of the keel wheel different from the (vertical) position of the bilge wheel. This may especially be realized by arranging the first and the second axle not in alignment with each other or (generally more common), when the (main) beams are rotated with respect to the first stand, by arranging the first axle not parallel to the second axle.

In an embodiment, the boat trailer comprises a support assembly, wherein the longitudinal axis of the first axle and the longitudinal axis of the second axle form an angle, wherein the angle may be selected in the range -45° - +45°. When the axles are positioned in alignment with each other, the angle equals 0°. The values in this range of angles intentionally extent from a negative value to a positive value to illustrate that e.g. the axle of the keel wheel may be arranged facing down when the axle of the bilge wheel is arranged substantially horizontally (wherein the angle is considered to be positive), whereas the axle of the keel wheel also may be arranged facing up when the axle of the bilge wheel is arranged substantially horizontally (wherein the angle comprises a negative value). As can be understood, the definition of the angle may have been differently selected, wherein the value of the angle in the first case is considered to be negative and in the latter case is considered to be positive. It is further noticed that the axle of the bilge wheel is not necessarily arranged substantially horizontally (during normal operation). This is only suggested in the above given example to clarify the meaning of a positive and a negative value of the angle.

Moreover, it may be beneficial to have the axle of the bilge wheel provided substantially horizontally for an appropriate support of the bilge of the boat. Yet, it also may be beneficial that the axle of the keel wheel is (with respect to the horizontal position) provided facing down because the steep slope of a keel.

In a specific embodiment, the boat trailer comprises a support assembly, wherein the second axle (especially the axle of the keel wheel) comprises a substantially horizontal position and the first axle (especially the axle of the bilge wheel) comprises a position turned downwards in relation to the horizontal position.

In a further embodiment, the boat trailer comprises at least one pair of support assemblies, comprising a first and a second support assembly, to support a boat. Herein, the first support assembly is arranged at the frame of the trailer as such that during operation of the trailer the first support assembly supports a boat at a first side of the hull, wherein one side of the hull comprises the part of the hull comprising the hull from the keel to and including the bilge (or from the bilge to and including the keel). The second support assembly of the set is successively configured at the frame to support the second side of the hull. Herein the first and the second support assembly are essentially arranged forming respective mirror (in a (vertical) plane) image, wherein the keel wheels of the individual support assemblies are facing each other and support the keel of the boat from both sides and wherein the bilge wheels support the bilge of the boat at both sides.

Hence, in a specific embodiment, the boat trailer comprises a pair of support assemblies which are arranged forming mutually mirror images with respect to a plane through the longitudinal axis parallel to the first stand of the boat trailer, wherein a first distance (d1) between the bilge wheels of the two support assemblies is larger than a second distance (d2) between the keel wheels of the support assemblies.

In an embodiment only the back side of the hull is supported by the support assembly of the invention during use of the trailer, whereas the hull of the boat at the front side is supported by another kind of support assembly. In a further embodiment, the hull of the boat is both at the back side and at the front side of the boat supported by the support assemblies of the present invention.

For boats having a hull showing a large variation in draught along their length of the boat, but also especially for long boats, it may be beneficial to support the hull of the boat at more locations than being possible with two pairs of support assemblies and hence to provide more than two pairs of support assemblies.

In a specific embodiment, the boat trailer comprises at least two pairs of support assemblies, wherein the pairs of support assemblies are arranged mutually translated in line with a longitudinal axis of the boat trailer. Consequently, a first set of support assemblies and a second set of support assemblies are derived, wherein the first set is arranged in closer proximity to a first (far) end of the trailer and a second set of support assemblies is arranged in closer proximity to a second (far) end of the trailer. Moreover, also over two pairs of support assemblies may be applied per boat trailer.

In a further embodiment, the boat trailer comprises a support assembly, wherein the beams at their second far end are provided with a second stand configured to provide an angle between a longitudinal axis of the second stand and a longitudinal axis of the first stand that does not change when rotating the main beams, and wherein the angle preferably is in the range between 120° and 240°, like between 150° and 210°, or between 170° and 190°, wherein an angle equal to 180° implies that the second stand is provided parallel to the first stand.

In a special embodiment, the (main) beams support at their first far end the first axle comprising the keel wheel, whereas the second far ends of the main beams are coupled to the second stand that extends in vertical direction and is coupled at its upper far end to a support beam comprising a continuous axle or at least an axle bar at both its far ends, wherein a bilge wheel is coupled to each axle bar, wherein the support beam or the axle may be rigidly connected to the second stand. Preferably however, this connection is provided hingedly or the construction is configured to provide an angle between the two bilge wheels during support of a boat. Consequently, a nearly optimal bilge support can be provided. A bilge support comprising two bilge support wheels may further be referred to in the description and claims by the term, "double bilge support". A double bilge support having bilge wheels provided that form an angle relative to each other may also be denoted herein by the term "a double bilge support with differentiated wheel angles".

In a specific embodiment, the boat trailer comprises a support assembly comprising a double bilge support with differentiated wheel angles comprising the second stand and a support beam.

In a further embodiment of the support assembly, the beams are telescopically extensible. During the production of this type of embodiment proper care has to be taken in providing the openings in the combination of extensible profiles to achieve the desired telescopic result. Furthermore, the (first and / or second) stand may comprise a construction adjustable in height, whether being telescopically or not. Additionally, the invention provides the hinged coupling of the beams of a support assembly to be adjustable in height.

In an embodiment of the boat trailer, the support assembly comprises one or more beams, wherein one or more of said beams is/are telescopically extensible. In another embodiment of the boat trailer, the support assembly comprises or more (main) beams and a support beam, wherein one or more of the main beams and the support beam is/are telescopically extensible.

In a specific embodiment of the boat trailer, the support assembly comprises one ore more stands adjustable in height.

For an effective support of large boats and small boats, it is beneficial if the support wheels are not just moveable in the longitudinal direction of a boat trailer as mentioned above (by translation of the support assemblies), but also if the support wheels are rotatable in a (vertical) plane parallel to the longitudinal axis of the boat trailer. Especially, this enables an improved support to small boats, but also for instance to boats having a non-flat, an inclined or any other type of slanted hull between the center and the rear end of the boat. Furthermore, for longer boats it may be beneficial to couple two or more support assemblies provided for support of one side of the hull of the boat (the first side of the hull or the second side of the hull) functionally and/or physically to one support assembly unit.

In a specific embodiment, the boat trailer comprises a support assembly, wherein the support assembly is at least partially rotatable in a plane parallel to a longitudinal axis of the boat trailer to provide this more effective support. In yet another embodiment, and optionally to combine with the aforementioned embodiment, the support assembly is at least partially rotatable in a plane perpendicular to the longitudinal axis of the boat trailer.

Additionally or alternatively, this specific support is provided by an embodiment wherein the boat trailer comprises a support assembly unit comprising two or more support assemblies.

In a further specific embodiment, the boat trailer comprises a support assembly unit comprising two or more support assemblies. In a further embodiment, this support assembly unit is rotatable in a (vertical) plane substantially perpendicular to the longitudinal axis of the boat trailer. In yet another embodiment, optionally to combine with the aforementioned embodiment, the support assembly unit is at least partially rotatable in a (vertical) plane parallel to the longitudinal axis of the boat trailer.

As mentioned before, in a preferred embodiment, the bilge wheels and the keel wheels of the support assembly comprise a surface having a curved cross-section (or curved surface), similar for instance to the tread of a bicycle tire. The invention provides one or more of the different parts of the support assembly comprising the axle bars, the beams and the stands to be fabricated from e.g. steel or stainless steel square tube profiles (or box beams).

Obviously, the invention also comprises embodiments of the support assembly in which the different parts are manufactured in other materials, such as aluminum, end/or from components comprising a profile different from square tubes or box beams.

In another aspect, the invention provides a trailer comprising a support assembly for a curved body, wherein the support assembly comprises a first stand, two beams, a first axle comprising a first support wheel and a second axle comprising a second support wheel, wherein the beams are parallel to each other hingedly coupled in between their far ends to the first stand, and wherein the two beams jointly support the first axle at their first far end and jointly support the second axle at their second far end, wherein the first axle and the second axle are moveable parallel to them selves by parallel-guiding.

Consequently, this trailer is especially suitable for transporting a (partly) curved body, such as a pipe, a silo, curved steel sheets, a vessel, etc.. Yet, the trailer can also be applied for transport of objects having a deviating form. The term "vessel" especially concerns a vessel provided with a keel. The terms "boat" and "vessel" essentially relate to the same object. Relevant vessels can for instance be selected from a yacht, a sailing boat, a life boat, a fishing boat, etc.. The vessel, or optional other curved body, is especially no longer than 50 meter, such as no longer than 25 meter, such as no longer than 12 meter or no longer than 8 meter. The trailer will generally be adjusted to the anticipated vessel to be transported. The trailer may, depending on the length and / or the anticipated vessel or potential other curved object to be transported, be provided with a single (trailer) axle or a tandem (trailer) axle, or a plurality of (trailer) axles.

In an embodiment, the trailer comprises a (whether or not motorized) winch for loading the body to be transported (such as a vessel, or possible other curved body). In another embodiment, the winch is not provided and may the body be arranged on the support assemblies either by hand or for instance by means of a crane, depending on the weight and size of the body.

The trailer, obviously, also comprises other embodiments of the support assembly and support assembly units described above in the description of the boat trailer of the invention. The term "substantially" herein, or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The terms vertical and horizontal and perpendicular also relate to situations deviating slightly from exactly vertical, such as 85-95° in relation to a horizontal, or to situations deviating slightly from exactly horizontal, such as e.g. 85-95° in relation to a vertical, etc..

The term "comprise" includes also embodiments wherein the term "comprises" means "consists of".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The device or apparatus herein are amongst others described during operation. As will be clear to the person skilled in the art, the invention is not limited to methods of operation or devices in operation.

It should be noted that in the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements.

The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

The invention further applies to a device, method or process comprising one or more of the characterizing features described in the description and/or shown in the attached drawings.

The various aspects discussed in this patent can be combined in order to provide additional advantages. Furthermore, some of the features can form the basis for one or more divisional applications.

### BRIEF DESCRIPTION OF THE DRAWINGS

Different embodiments and aspects of embodiments of the boat trailer and the support assembly are given in the accompanying schematic drawings, in which:
Fig. 1 schematically depicts an embodiment of a frame 1 of a boat trailer 30;
Fig. 2 schematically depicts an embodiment of an assembly of beams and axles for mounting a keel wheel and a bilge wheel respectively;
Figs 3 and 4 each schematically depict the in Fig. 2 given assembly, wherein the position of the beams is changed;
Fig. 5 schematically depicts a rear view of a boat trailer according to the invention comprising a double bilge support;
Fig. 6 schematically depicts another aspect of the support assembly of the invention; and
Fig. 7 schematically depicts a support assembly unit.

Corresponding reference symbols used in the description and in the figures indicate the same or corresponding parts. The drawings are not necessarily on scale.

### DETAILED DESCRIPTION OF THE EMBODIMENTS

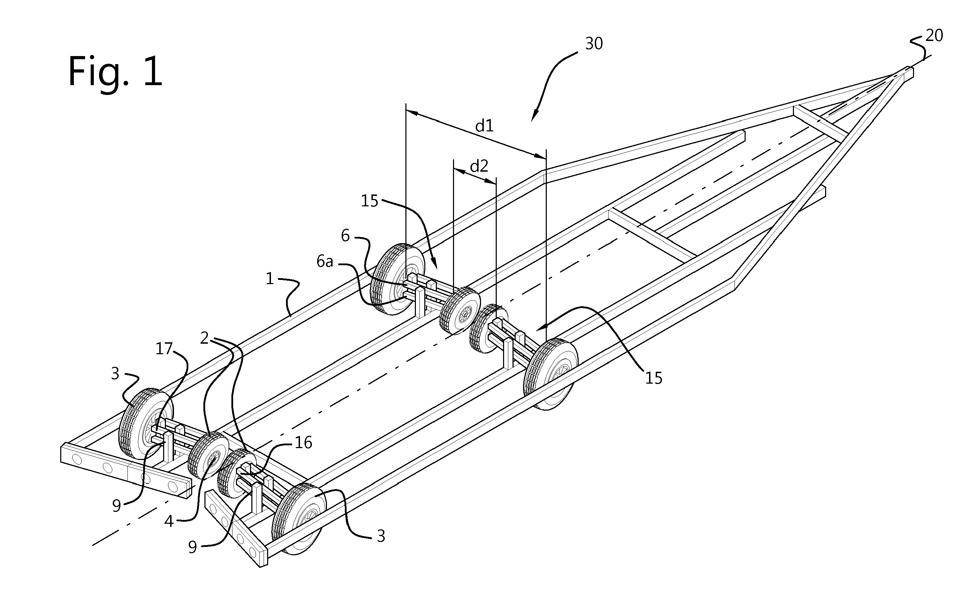

Fig. 1 schematically depicts an embodiment of a frame 1 of a boat trailer 30, wherein - for the sake of clarity - the (trailer) wheels have been deleted.

In this embodiment the trailer comprises four pairs of support wheels 2 and 3, i.e. four times two support wheels, or four support assemblies 15 to support a boat. Each pair of support wheels comprises a first support wheel 2 of the pair of wheels, positioned at a side facing towards the middle of the frame, herein further also referred to as keel wheel 2, and a second support wheel 3 of the pair of wheels, positioned at a towards the outside of the frame facing side, herein also referred to as bilge wheel 3. The figure clearly shows that the distance d1 between two bilge wheels of two different support assembly units 15 - which are arranged forming mutually mirror images with respect to a plane through the longitudinal axis 20 of the boat trailer parallel to the first stand 9 - is larger than the distance d2 between keel wheels 3 of the respective support assembly units 15.

The keel wheel 2 is rotatably mounted on a first axle 4, which is rotatably in a vertical plane coupled to a first far end 16 of one or more beams 6 and 6a, wherein the beams (herein also referred to as "main beams") are in a vertical plane hingedly coupled to the frame 1 of the trailer. The bilge wheel 3 is rotatably mounted on the second axle 4a, rotatably in a vertical plane coupled to a second far end 17 of one or more beams 6 ("first (main) beam") and 6a ("second (main) beam"), wherein the beams are in a vertical plane hingedly coupled to frame 1 of the boat trailer. A further distinctive feature of the boat trailer of the invention relates to the fact that in a preferred embodiment the external diameter of the bilge wheels 3 is larger than the external diameter of the keel wheels 2.

Hence, the frame 1 comprises at least two, preferably at least four, support assemblies 15.

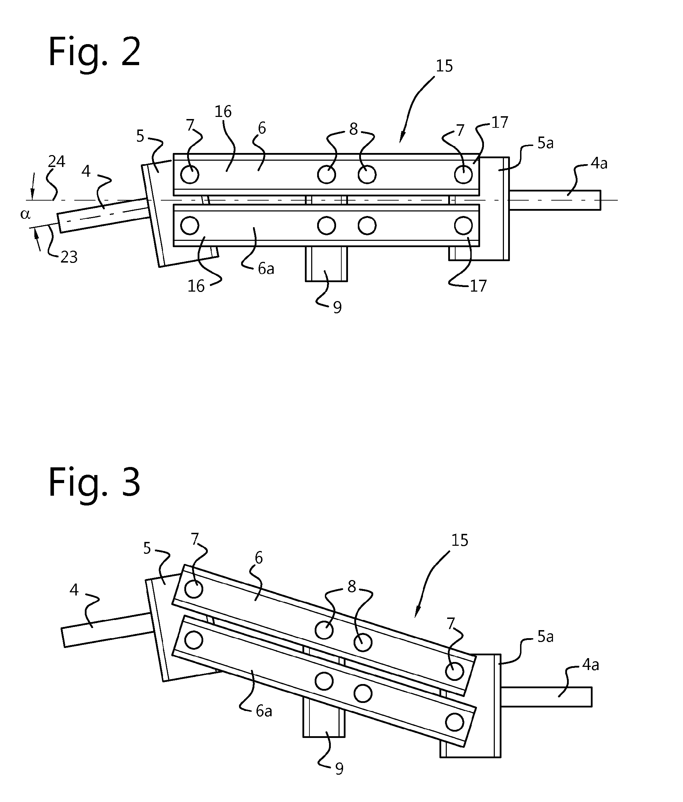

Figure 2 schematically depicts an embodiment of an assembly 15 providing at least two beams 6 and 6a and two axles 4 and 4a for mounting respectively a keel wheel 2 and a bilge wheel 3. This assembly 15 is also referred to herein as a support assembly 15. Moreover, optionally more than two parallel arranged beams 6 (6a, 6b, 6c, etc.) may be provided.

In the respective embodiment, the support assembly 15 comprises a first axle 4 and a second axle 4a, on which respectively a keel wheel 2 and a bilge wheel 3 can be mounted. The first axle 4 is rigidly connected to a first axle bar 5 and the second axle 4a is rigidly connected to a second axle bar 5a. Further, the assembly 15 comprises a first beam 6 and a second beam 6a, provided below and substantially parallel to the first beam 6. Both beams comprise several openings 7 and 8 and may be coupled hingedly in a vertical plane to a (first) stand 9, by inserting a fastener, such as a pin or bolt, through an opening 8. In the presented embodiment - wherein for the sake of clarity only the openings in the first beam 6 are indicated with reference symbols - beams 6 and 6a each comprise two openings 8. The potential vertical displacement of a support wheel is controlled by selecting either the first opening 8 or the second opening 8 for coupling the beam(s) 6 (and 6a) to the (first) stand 9. The invention provides that the beams comprise many more than two openings 8 and hence that both beams 6 and 6a may be coupled in more than two ways to the (first) stand 9. The beams 6 and 6a each are provided with openings 7 at or near their far ends 16 and 17 to rotatably couple the axle bars 5 and 5a respectively to the beams; in the axle bars openings are configured for coupling the axle bars 5 and 5a to the beams 6 and 6a. In this embodiment, the first axle bar 5 is characterized in that the provided location of the openings for coupling the first axle bar 5 to the first far end 16 of beams 6 and 6a cause a downwards facing position of the longitudinal axis 23 of the first axle 4, coupled to the first axle bar 5 (relative to the horizontal position), when the position of the beams 6 and 6a are substantial horizontal, whereas the position of the longitudinal axis 24 of the second axle 4a nevertheless is substantially horizontal. Herewith, the longitudinal axis 23 of the first axle 4 and the longitudinal axis 24 for the second axle 4a form an angle α of, in this instance, approximately +10°

The position of the first axle 4 together with a horizontal position of the beams as shown in this embodiment of the support assembly 15 is related to the anticipated steeper slope of the hull near the keel. Consequently, the keel wheel 2, mountable on the first axle 4, will generally be capable to trace the contours of the boat much better and hence offers a more effective support to the boat.

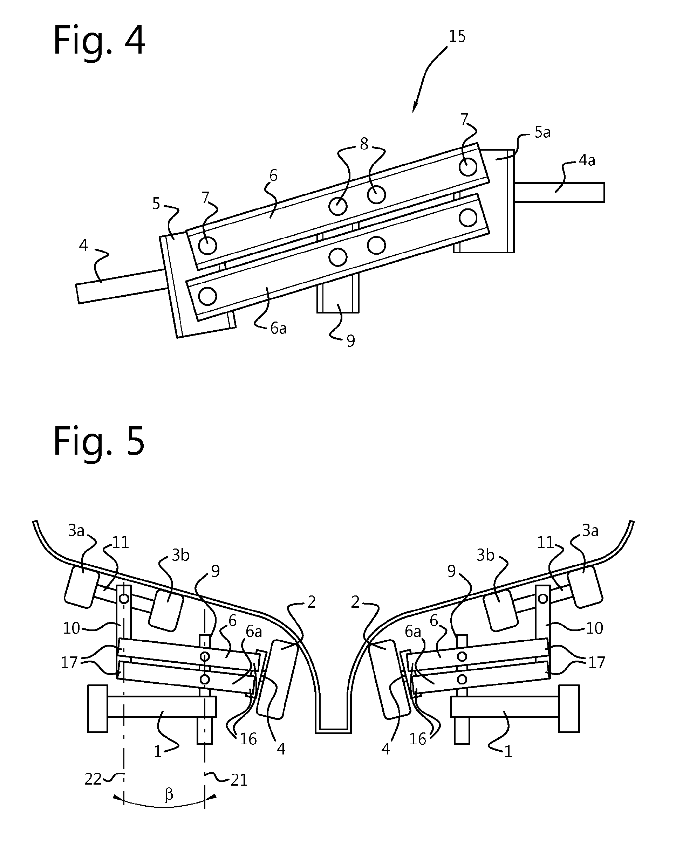

Figures 3 and 4 depict aspects of the support assembly 15 of the same embodiment presented in figure 2, wherein the position of the beams 6 and 6a are changed compared to the horizontal position as depicted in figure 2. The figures clearly show that the first axle 4 maintains its non-horizontal position and the second axle 4a maintains its horizontal position when the beams are rotated. This comes as no surprise and is a based on the pattern of the openings 7 and 8 used to rotatably couple the main beams and the axle bars 5 and 5a. Figure 5 schematically depicts a rear view of a part of a trailer according to the invention, wherein a hull is depicted by the contours of a cross section of a boat provided on the trailer and wherein the trailer comprises a double bilge support.

In this example, wherein the frame 1 of the trailer is pictured and where the chassis including the wheels of the trailer is deleted, the beams 6 and 6a, herein also referred to as main beams, are coupled to an axle bar (not shown in the figure) with a first axle 4 provided with a keel wheel 2 at the keel-side far end (the first far end 16). The beams 6 and 6a are coupled to a (movable) (second) stand 10 at the second far end 17, the far end of the beams at the bilge side of the boat. The second stand 10 extends in vertical direction and is coupled at its upper end to a support beam 11 comprising a continuous axle or at both ends at least an axle bar, wherein on each axle bar a bilge wheel, respectively 3a and 3b is provided. The axle bars in this example are provided in alignment with each other. (The second stand, essentially, is a specific embodiment of the second axle bar 5a)

The invention also provides in mounting both bilge wheels 3a and 3b on axles or axle ends that are both coupled to two beams 11 by means of axle bars as such that the axles or the axle ends form an angle, and consequently the two bilge wheels 3a and 3b form an angle relative to each other. Consequently, a substantially optimal bilge support is provided. The longitudinal axis 21 of the first stand 9 and the longitudinal axis 22 of the second stand 10 are positioned parallel to each other in this embodiment. Hence, the angle β between the longitudinal axes 21 and 22 equals 0° and therefore is not indicated in figure 5. When the slope of the beams 6 and 6a change, this angle β will remain 0° because of the parallel-guiding. Moreover, in a possible embodiment the unit comprising the elements 10, 11, and 3a and 3b is essentially the unit depicted for instance in the figures 2-4.

The bilge support comprising two bilge support wheels may further be referred to in the description and claims by the term, "double bilge support". A double bilge support having bilge wheels provided that form an angle relative to each other may also be denoted herein by the term "a double bilge support with differentiated wheel angles". Optionally, a double keel support may be provided too (not pictured in the figures).

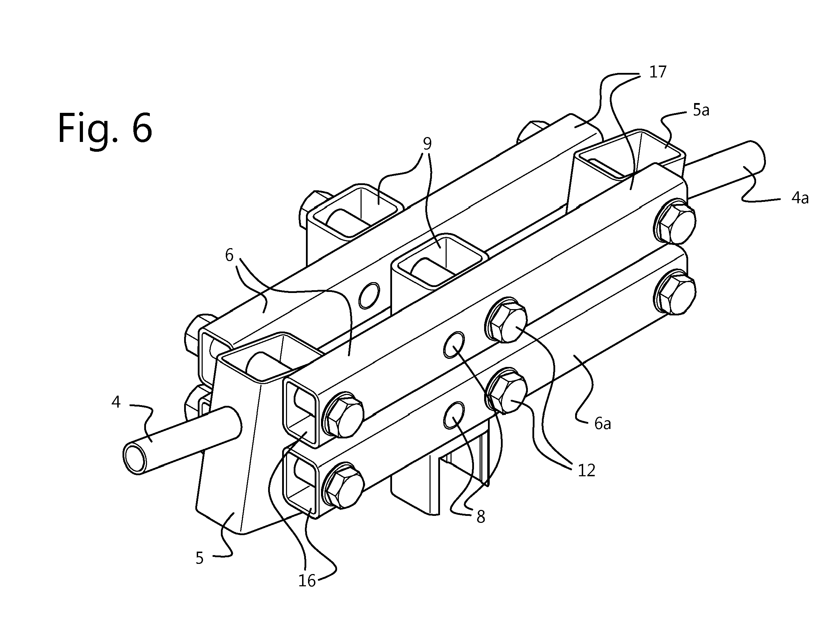

Figure 6 schematically depicts some aspects of another embodiment of the support assembly 15. In this embodiment, the beams 6 and 6a are provided in duplicate to reinforce the support assembly 15. The figure also shows that the first axle 4 or the second axle 4a do not necessarily have to be arranged substantially horizontal. Further, the figure clearly shows the fastening elements 12, here bolts and nuts, that couple the beams 6 and 6a rotatably to the stand 9 and are provided in one of the set openings 8 (the ones that are not visible any more).

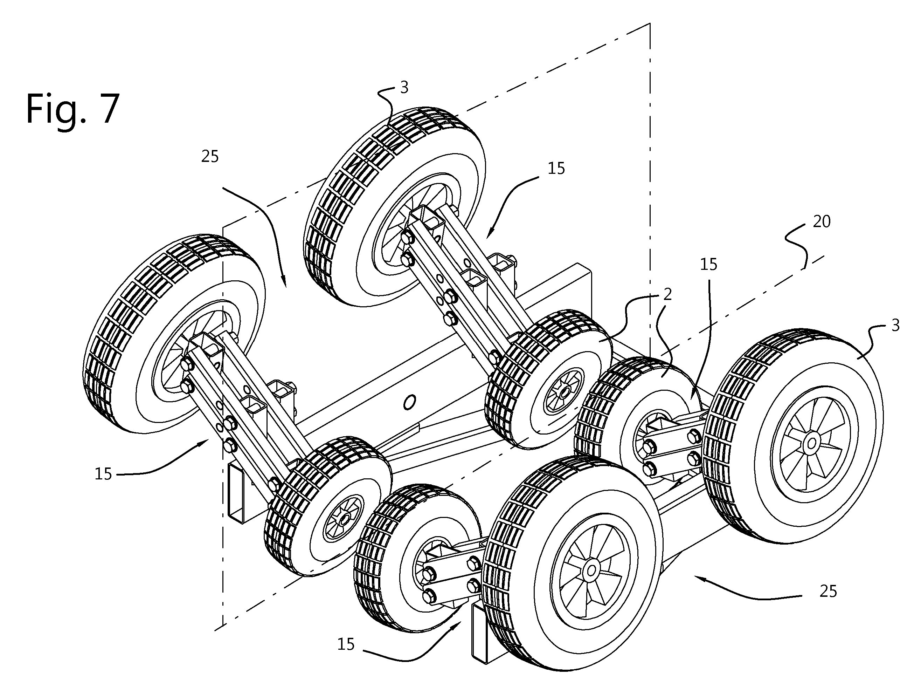

Figure 7 schematically depicts two support assembly units 25 each comprising two support assemblies 15. In each support assembly 15, the bilge wheel 3 and the keel wheel 2 are movable parallel to themselves because of parallel-guiding and hence during use they effectively support the bilge and the keel of a boat. Additionally, the two different support assemblies 15 of each support assembly unit 25 are in this embodiment each rotatable in a plane parallel to the longitudinal axis 20 of the boat trailer.

It should be noted that the above-mentioned embodiments illustrate rather than limit the invention. Based on the above-mentioned information, those skilled in the art will be able to design many alternative embodiments without departing from the scope of the appended claims.

### References

- 1: frame of a boat trailer
- 2: keel wheel
- 3, 3a, 3b: bilge wheel
- 4: first axle
- 4a: second axle
- 5: first axle bar
- 5a: second axle bar
- 6, 6a: (main) beam
- 7: opening in a beam at the far end side
- 8: opening in a beam between the far end sides (to couple to the stand)
- 9: first stand
- 10: second stand
- 11: support beam
- 12: fastening elements
- 15: support assembly
- 16: first far end of a beam
- 17: second far end of a beam
- 20: longitudinal axis of the boat trailer
- 21: longitudinal axis of the first stand
- 22: longitudinal axis of the second stand
- 23: longitudinal axis of the first axle
- 24: longitudinal axis of the second axle
- 25: support assembly unit

- α: angle between the longitudinal axis of the first axle and a longitudinal axis of the second axle
- β: angle between a longitudinal axis of the first stand and a longitudinal axis of a second stand
- d1: distance between the bilge wheels of two support assemblies
- d2: distance between the keel wheels of two support assemblies

## Claims

1. A boat trailer comprising a support assembly (15) for a vessel, wherein the support assembly (15) comprises a first stand (9), two beams (6, 6a), a first axle (4) comprising a keel wheel (2) and a second axle (4a) comprising a bilge wheel (3), wherein the beams (6, 6a) are parallel to each other hingedly coupled in between their far ends (16, 17) to the first stand (9), and wherein the two beams (6, 6a) jointly support the first axle (4) at their first far end (16) and jointly support the second axle (4a) at their second far end (17), wherein the first axle (4) and the second axle (4a) are moveable parallel to themselves by parallel-guiding.

2. The boat trailer according to claim 1, wherein the external diameter of the keel wheel (2) differs from the external diameter of the bilge wheel (3).

3. The boat trailer according to one or more of the preceding conclusions, wherein the keel wheel (2) and the bilge wheel (3) are both exchangeable.

4. The boat trailer according to one ore more of the preceding claims, wherein a longitudinal axis of the first axle (4) and a longitudinal axis of the second axle (4a) form an angle (α), wherein the angle may be selected in the range -45° - +45°.

5. The boat trailer according to claim 4, wherein the second axle (4a) comprises a substantially horizontal position and the first axle (4) comprises a position turned downwards in relation to the horizontal position.

6. The boat trailer according to one ore more of the preceding claims, comprising a pair of support assemblies (15) which are arranged forming mutually mirror images with respect to a plane through the longitudinal axis (20) parallel to the first stand (9) of the boat trailer, wherein a first distance (d1) between the bilge wheels (3) of the two support assemblies (15) is larger than a second distance (d2) between the keel wheels (3) of the support assemblies (15).

7. The boat trailer according to claim 6, comprising at least two pairs of support assemblies (15), wherein the pairs of support assemblies (15) are arranged mutually translated in line with a longitudinal axis (20) of the boat trailer.

8. The boat trailer according to one ore more of the preceding claims, wherein the beams (6, 6a) at their second far end (17) are provided with a second stand (10) configured to provide an angle (β) between a longitudinal axis (22) of the second stand (10) and a longitudinal axis (21) of the first stand (9) that does not change when rotating the beams (6, 6a).

9. The boat trailer according to claim 8, wherein the boat trailer comprises a double bilge support with differentiated wheel angles comprising the second stand (10) and a support beam (11).

10. The boat trailer according to one ore more of the preceding claims, wherein one or more of the (support) beams (6, 6a, 11) are telescopically extensible.

11. The boat trailer according to one ore more of the preceding claims, wherein one ore more stands (9, 10) are adjustable in height.

12. The boat trailer according to one ore more of the preceding claims, wherein the beams (6, 6a) comprise at least three openings (7, 8) each.

13. The boat trailer according to one ore more of the preceding claims, wherein the support assembly (15) is at least partially rotatable in a plane parallel to a longitudinal axis (20) of the boat trailer.

14. The boat trailer according to one ore more of the preceding claims, wherein the boat trailer comprises a support assembly unit (25) comprising two or more support assemblies (15).

15. A trailer comprising a support assembly (15) for a curved body, wherein the support assembly (15) comprises a first stand (9), two beams (6, 6a), a first axle (4) comprising a first support wheel (2) and a second axle (4a) comprising a second support wheel (3), wherein the beams (6, 6a) are parallel to each other hingedly coupled in between their far ends (16, 17) to the first stand (9), and wherein the two beams (6, 6a) jointly support the first axle (4) at their first far end (16) and jointly support the second axle (4a) at their second far end (17), wherein the first axle (4) and the second axle (4a) are moveable parallel to themselves by parallel-guiding.
